# EUROPEAN PATENT SPECIFICATION

(11) **EP 2 741 532 B1**
(45) Date of publication and mention of the grant of the patent: **18.05.2016**
(21) Application number: 12831677.5
(22) Date of filing: 05.06.2012
(51) Int. Cl.: H04W 16/14, H04L 5/00

(54) **SPECTRUM AGGREGATION METHOD AND DEVICE**
SPEKTRUMSAGGREGATIONSVERFAHREN UND -VORRICHTUNG
PROCÉDÉ ET DISPOSITIF D'AGRÉGATION DE SPECTRES

(30) Priority: 15.09.2011 CN 201110273275
(43) Date of publication of application: 11.06.2014
(73) Proprietor: Huawei Technologies Co., Ltd., Longgang District Shenzhen, Guangdong 518129 (CN)
(72) Inventor: GAO, Lei, Shenzhen Guangdong 518129 (CN)
(74) Representative: Epping - Hermann - Fischer
(86) International application number: PCT/CN2012/076489
(87) International publication number: WO 2013/037218

(56) References cited:
- EP-A1- 2 293 633
- CN-A- 101 404 539
- CN-A- 101 741 803
- CN-A- 101 754 230
- CN-A- 102 118 756
- US-A1- 2010 113 050
- NTT DOCOMO: "Views on Downlink Reception Bandwidth Considering Power Saving Effect in LTE-Advanced", 3GPP DRAFT; R1-090898 UE POWER SAVING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318743, [retrieved on 2009-02-03]

## Description

### TECHNICAL FIELD

Embodiments of the present invention relate to the field of wireless communication and, in particular, to a method and device for spectrum aggregation.

### BACKGROUND

Large-bandwidth wireless transmission has the direct advantages of high data rates and supporting multimedia services, and has the indirect advantage of reducing power consumption of the receiver by shortening the data transmission time. Since the large-bandwidth transmission has many advantages, the large-bandwidth wireless transmission has become a major development trend of mobile communication systems. The transmission bandwidth of the mobile communication system is being increased, from 5 MHz (initially designed bandwidth) of the universal mobile telecommunications system (UMTS) system to 20 MHz of the long term evolution (Long Term Evolution, LTE for short) system, and then to 100 MHz of the LTE evolution advanced system (Long Term Evolution Advanced, LTE-A for short).

One way to achieve, by the mobile communication systems, the large-bandwidth transmission is multi-carrier aggregation, which is also known as spectrum aggregation. The multi-carrier aggregation utilizes a plurality of carriers, of which the maximum modulation bandwidth is less than 20 MHz, to aggregate into a transmission bandwidth of 20MHz∼100MHz, its advantage is that existing radio frequency power amplifier technologies can be based on, and being fully compatible with previous systems is easy to achieve, its disadvantage is that the a bandwidth of 20 MHz and a UMTS dual-carrier system with a bandwidth of 10 MHz constitute a cooperative communication system with a transmission bandwidth of 30 MHz. Relative to providing a required transmission bandwidth all by a brand new broadband LTE-A system, advantages of the solution of obtaining a large bandwidth through multi-system cooperation are: reducing the operational investment in new systems, fully utilizing the existing system resources of operators, being compatible with the existing user terminals of the operators, and ensuring the smooth evolution of systems.

Orthogonal frequency-division multiplexing (Orthogonal frequency-division multiplexing, OFDM for short) is to divide a high-speed data stream into several low-speed data streams, and modulate the several low-speed data streams on several carriers which are orthogonal with each other for transmission. Since the bandwidth of each subcarrier is relatively small, which is closer to the coherence bandwidth, frequency selective fading can be effectively restrained, therefore, it has been widely adopted in wireless communications now. The orthogonal frequency-division multiplexing belongs to the multi-carrier (multi-carrier) transmission technology, where the multi-carrier transmission technology refers to that, the available spectrum is divided into a plurality of subcarriers, and each subcarrier can carry a low-speed data stream. Taking 802.11ac as an example, only one spectrum aggregation mode of 80M+80M is supported currently, the aggregation mode is not flexible, which is not conducive to the full use of spectrum resources. Prior art document NTT DOCOMO: "Views on Downlink Reception Bandwidth Considering Power Saving Effect in LTE-Advanced", 3GPP DRAFT; R1-090898 UE POWER SAVING promotes a detailed discussion on the best reception bandwidth for the downlink shared and control channels from the viewpoint of UE power saving as well achieving high-level requirements in LTE-Advanced (see Abstract). Prior art document EP 2293633 A1 discloses a resource allocation method, a system, and a device, so that flexible resource allocation is achieved. In the method, a spectrum aggregating mode available for UE in a period of time and a concrete definition method of each spectrum aggregating mode are sent to the UE, so that changes of UE abilities, services, and a load of each carrier may be adapted (see Abstract).

### SUMMARY

Embodiments of the present invention are aimed at providing a method for spectrum aggregation with flexible bandwidth combination.

According to an embodiment of the present invention, a spectrum aggregation method is provided, the method includes:
combining a first channel bandwidth (CBW) and a second CBW to form an aggregated CBW, where the aggregated CBW includes a first bandwidth portion formed by the first CBW and a second bandwidth portion formed by the second CBW;
sending data to a receiving end on the aggregated CBW;
wherein, forming the first bandwidth portion by the first CBW and forming the second bandwidth portion by the second CBW include:
changing, in a first transform proportion, a clock frequency of the first CBW to form the first bandwidth portion, and/or
changing, in a second transform proportion, a clock frequency of the second CBW to form the second bandwidth portion.

According to an embodiment of the present invention, a device for spectrum aggregation is provided, the device includes:
a configuring unit, configured to combine a first channel bandwidth (CBW) and a second CBW to form an aggregated CBW, where the aggregated CBW includes a first bandwidth portion formed by the first CBW and a second bandwidth portion formed by the second CBW;
a sending unit, configured to send data on the aggregated CBW; and
a transforming unit, configured to change, in a first transform proportion, a clock frequency of the first CBW to form the first bandwidth portion, and/or change, in a second transform proportion, a clock frequency of the second CBW to form the second bandwidth portion.

According to embodiments of the present invention, flexible spectrum aggregation can be achieved, and spectrum resources can be fully utilized.

### BRIEF DESCRIPTION OF DRAWINGS

To illustrate the technical solutions of embodiments of the present invention more clearly, the accompanying drawings used for describing the embodiments or the prior art are briefly described hereunder, apparently, the accompanying drawings in the following description merely show some embodiments of the present invention, and persons of ordinary skill in the art can obtain other drawings according to the accompanying drawings without creative efforts.
FIG. 1 is a flowchart of a method for spectrum aggregation according to an embodiment of the present invention;
FIG. 2 is a flowchart of a method for spectrum aggregation according to a further embodiment of the present invention;
FIG. 3 is a schematic structural diagram of a device for spectrum aggregation according to an embodiment of the present invention;
FIG. 4 is a schematic structural diagram of a device for spectrum aggregation according to a further embodiment of the present invention.

### DESCRIPTION OF EMBODIMENTS

The technical solutions in embodiments of the present invention are described in the following clearly and comprehensively with reference to the accompanying drawings, obviously, the embodiments described are only a part of embodiments of the present invention, rather than

### DESCRIPTION OF EMBODIMENTS

The technical solutions in embodiments of the present invention are described in the following clearly and comprehensively with reference to the accompanying drawings, obviously, the embodiments described are only a part of embodiments of the present invention, rather than all embodiments. All other embodiments obtained by persons of ordinary skill in the art on the basis of the embodiments herein without any creative effort fall within the protection scope of the present invention.

The technical solutions of the present invention may be applied to various communication systems, for example: GSM, code division multiple access (CDMA, Code Division Multiple Access) systems, wideband code division multiple access (WCDMA, Wideband Code Division Multiple Access), general packet radio service (GPRS, General Packet Radio Service), long term evolution (LTE, Long Term Evolution), etc.

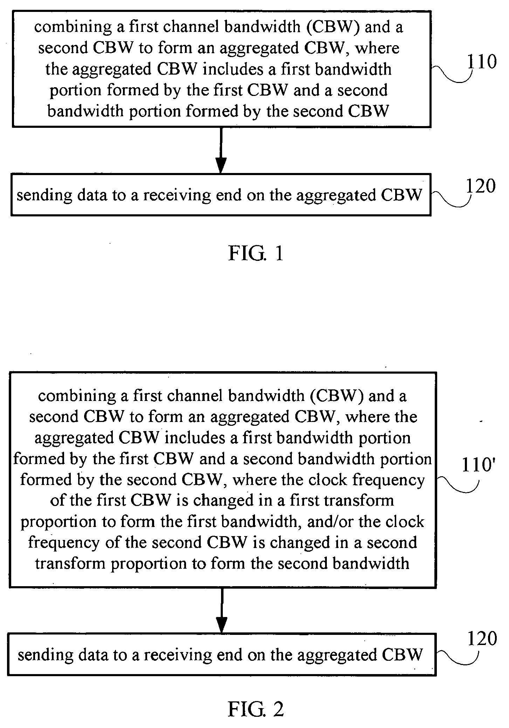

FIG. 1 is a flowchart of a method for spectrum aggregation according to an embodiment of the present invention. As shown in FIG. 1, the method for spectrum aggregation 100 includes:
110: combining a first channel bandwidth (Channel Bandwidth, CBW for short) and a second CBW to form an aggregated CBW, where the aggregated CBW includes a first bandwidth portion formed by the first CBW and a second bandwidth portion formed by the second CBW;
120: sending data to a receiving end on the aggregated CBW.

The following describes the method according to this embodiment of the present invention with reference to aggregation examples.

In a general multi-carrier transmission system, after being coded, modulated and serial-parallel converted, the data is OFDM modulated on each frequency portion of the aggregation spectrum, respectively, and then is transmitted through a radio frequency unit.

For step 110, both the first CBW and the second CBW may select 20MHz, 40MHz and 80MHz. Thus the aggregated CBW formed by combining the first CBW and the second CBW may be CBW20+20, CBW20+40, CBW40+40, CBW20+80, CBW40+80, etc. The first bandwidth portion formed by the first CBW and the second bandwidth portion formed by the second CBW in the aggregated CBW, are processed in the same process mode as the separate first CBW and the separate second CBW are processed, respectively. For example, for the aggregated CBW20+40, the process mode of the portion of 20MHz is the same as that of the CBW20, and the process mode of the portion of 40MHz is the same as that of the CBW40. The specific OFDM related parameters are shown in Table 1.

**Table 1**

| Parameter | CBW20 | CBW40 | CBW20+40 | | Description |
|---|---|---|---|---|---|
| *N_{DFT}* | 64 | 128 | 64 | 128 | DFT length of each OFDM symbol |
| *N_{SD}* | 52 | 108 | 52 | 108 | Data subcarrier number of each OFDM symbol |
| *N_{SP}* | 4 | 6 | 4 | 6 | Pilot subcarrier number of each OFDM symbol |
| *N_{ST}* | 56 | 114 | 56 | 114 | Subcarrier total number of each OFDM symbol |
| *N_{SR}* | 28 | 58 | 28 | 58 | Highest data subcarrier index of each OFDM symbol |
| *N_{Seg}* | 1 | 1 | 2 | | Number of frequency portions in the spectrum aggregation |
| Δ*_{F}* | 312.5kHz | | | | Subcarrier frequency interval |
| *T_{DFT}* | 3.2µs | | | | IDFT/DFT period |
| *T_{GI}* | 0.8µs | | | | Guard interval period |

For an aggregated CBW, such as CBW40+40, formed by the first CBW and the second CBW which are the same as each other, when sending the data on the aggregated CBW in step 120, only the inverse Fourier transform (IDFT) points is changed in the sending procedure on the basis of CBW80+80.

For an aggregated CBW, such as CBW20+40, formed by the first CBW and the second CBW which are different from each other, in addition to the change of the IDFT points, when sending the data on the aggregated CBW in step 120, the data allocation ratio of the first bandwidth portion and the second bandwidth portion also needs to be changed. For example, for CBW40+40, the data will be serial-parallel converted in the proportion of 1:1, so as to allocate the serial data stream to two bandwidth portions, however, for example, for CBW20+40, the serial data stream will be serial-parallel converted in the proportion of 1:2.

According to a further embodiment of the present invention, as shown in FIG. 2, in step 110', forming the first bandwidth portion by the first CBW and forming the second bandwidth portion by the second CBW. may include: changing, in a first transform proportion, the clock frequency of the first CBW to form the first bandwidth, and/or changing, in a second transform proportion, the clock frequency of the second CBW to form the second bandwidth.

The descriptions are given below with reference to specific examples. For example, both the first CBW and the second CBW are 80MHz, then the aggregated CBW is CBW80+80. For example, the first transform proportion is 1/4, and the second transform proportion is 1/2, for the first bandwidth portion, the clock frequency is changed to 80*1/4=20, and for the second bandwidth portion, the clock frequency is changed to 80*1/2=40, then the solution for aggregating CBW20+40 can be achieved. The corresponding OFDM related parameters are shown in Table 2.

**Table 2**

| Parameter | CBW80 | CBW80+80 | CBW20+40 | | Description |
|---|---|---|---|---|---|
| *N_{DFT}* | 256 | 256 | 256 | | DFT length of each OFDM symbol |
| *N_{SD}* | 234 | 234 | 234 | | Data subcarrier number of each OFDM symbol |
| *N_{SP}* | 8 | 8 | 8 | | Pilot subcarrier number of each OFDM symbol |
| *N_{ST}* | 242 | 242 | 242 | | Subcarrier total number of each OFDM symbol |
| *N_{SR}* | 122 | 122 | 122 | | Highest data subcarrier index of each OFDM symbol |
| *N_{Seg}* | 1 | 2 | 2 | | Number of frequency portions in the spectrum aggregation |
| Δ*_{F}* | 312.5kHz | | 78.125kHz | 156.25kHz | Subcarrier frequency interval |
| *T_{DFT}* | 3.2µs | | 12.8µs | 6.4µs | IDFT/DFT period |
| *T_{GI}* | 0.8µs | | 3.2µs | 1.6µs | Guard interval period |

For example, in the case that the first transform proportion is 1/4, after the clock frequency is changed, the subcarrier interval is reduced to a quarter of the previous subcarrier interval, and the OFDM symbol time is extended to quadruple of the previous OFDM symbol time, the advantage of such settings is that the Fourier transform (FFT) length can be kept the same, the entire signal sending and receiving procedure can follow the case of the CBW80+80, and the overall change is relatively small.

According to a further embodiment of the present invention, the first CBW and the second CBW may not use 80MHz, but select other bandwidths, for example, the first CBW is 40MHz, the second CBW is 40MHz, in this case, the first transform proportion may be selected as 1/2, and the second transform proportion may be selected as 1, then the technical solution for aggregating CBW20+40 can be achieved as well.

According to this embodiment of the present invention, if the first bandwidth portion and the second bandwidth portion are different after the clock frequencies are changed, then when sending data on the aggregated CBW in step 120, the data allocation ratio of the first bandwidth portion and the second bandwidth portion, which are formed after the clock frequencies are changed, needs to be changed. For example, for the CBW40+40 formed after the clock frequencies are changed, the data will be serial-parallel converted in the proportion of 1:1, so as to allocate the serial data stream to two bandwidth portions, however, for example, for the CBW20+40, the serial data stream will be serial-parallel converted in the proportion of 1:2.

According to a further embodiment of the present invention, for example, the first CBW is 20MHz, and the second CBW is 20MHz, in this case the first transform proportion may be selected as 2, and the second transform proportion may be selected as 4, then the technical solution for aggregating CBW480+40 can be achieved. In this case, when sending data in step 120, the serial data stream will be serial-parallel converted in the proportion of 1:2, and then allocated to the first bandwidth portion and the second bandwidth portion.

According to embodiments of the present invention, the flexible spectrum aggregation can be achieved, and spectrum resources can be fully utilized.

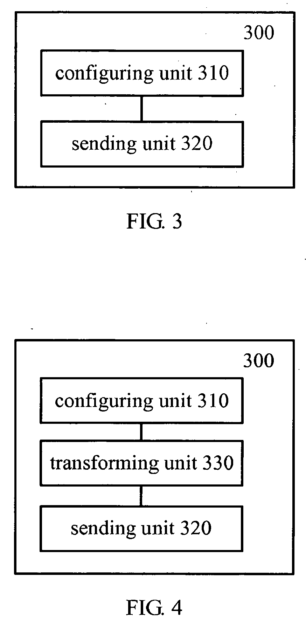

According to embodiments of the present invention, a device for implementing the spectrum aggregation is also provided. FIG. 3 is a schematic structural diagram of a device 300 for spectrum aggregation according to an embodiment of the present invention. As shown in FIG. 3, the device 300 includes:
a configuring unit 310, configured to combine bandwidths of a first CBW and a second CBW to form an aggregated CBW, where the aggregated CBW includes a first bandwidth portion formed by the first CBW and a second bandwidth portion formed by the second CBW; and
a sending unit 320, configured to send data on the aggregated CBW.

It should be noted that features of the foregoing method embodiments of the present invention, under appropriate circumstances, are applicable to the device embodiments of the present invention, and vice versa.

The following describes the structure and working process of the device 300 according to embodiments of the present invention with reference to specific examples.

For example, the configuring unit 310 combines a first CBW of 20MHz and a second CBW of 40MHz to form an aggregated CBW20+40, then the specific OFDM related parameters of the aggregated CBW20+40 are shown in the above Table 1.

According to the description of the method embodiments of the present invention, in this case, when sending the data on the aggregated CBW, the ratio of the first bandwidth portion and the second bandwidth portion is the data allocation ratio, the sending unit 320 is configured to allocate, in the data allocation ratio, the data to the first bandwidth portion and the second bandwidth portion for sending, respectively. For example, in the above example, the sending unit 320 performs the serial-parallel conversion on the serial data stream in the ratio of 1:2, and then allocates to the first bandwidth portion of 20MHz and the second bandwidth portion of 40MHz for sending.

According to this embodiment of the present invention, both the first CBW and the second CBW may select 20MHz, 40MHz and 80MHz. The first CBW and the second CBW may be the same or different. Therefore, the aggregated CBW formed by combining the first CBW and the second CBW may be CBW20+20, CBW20+40, CBW40+40, CBW20+80, CBW40+80, etc.

According to a further embodiment of the present invention, as shown in FIG. 4, the device 300 may further include: a transforming unit 330, configured to change, in a first transform proportion, the clock frequency of the first CBW to form the first bandwidth portion, and/or change, in a second transform proportion, the clock frequency of the second CBW to form the second bandwidth portion.

For example, both the first CBW and the second CBW are 80MHz, then the aggregated CBW is CBW80+80. For example, the first transform proportion is 1/4, and the second transform proportion is 1/2, for the first bandwidth portion, the transforming unit 330 changes the clock frequency to 80*1/4=20, and for the second bandwidth portion, the transforming unit 330 changes the clock frequency to 80*1/2=40, then the solution for aggregating CBW20+40 can be achieved. The corresponding OFDM related parameters are shown in Table 2. When both the first transform proportion and the second transform proportion are 1/4, the solution for aggregating CBW20+20 can be achieved, and when both the first transform proportion and the second transform proportion are 1/2, the solution for aggregating CBW40+40 can be achieved.

According to embodiments of the present invention, if the first bandwidth portion and the second bandwidth portion are different after the clock frequencies are changed, when the sending unit 320 sends the data on the aggregated CBW, the data allocation ratio of the first bandwidth portion and the second bandwidth portion needs to be changed. For example, for the CBW40+40, the data will be serial-parallel converted in the proportion of 1:1, and the serial data stream is allocated to two bandwidth portions, however, for example, for the CBW20+40, the serial data stream will be serial-parallel converted in the proportion of 1:2.

It can be realized by those skilled in the art that, the units and algorithm steps of each example, which are described in combination with embodiments disclosed herein, may be implemented by the electronic hardware, or by a combination of the computer software and the electronic hardware. Whether these functions are executed by way of hardware or software depends on the particular application and design constraints of the technical solution. Those skilled in the art can use different methods for each specific application to achieve the described functions, however, such implementations should not be considered as exceeding the scope of the present invention.

It can be known clearly by those skilled in the art that, in order to describe conveniently and briefly, regarding the specific working process of the systems, apparatuses and units described above, please refer to the corresponding process of the aforementioned method embodiments, which will not be repeated here.

In these embodiments provided by this application, it should be understood that the disclosed systems, apparatuses and methods can be achieved in other ways. For example, the above-described apparatus embodiments are merely exemplary, for example, the division of units is only a logic function division, there may be other dividing modes in actual implementations, for example, a plurality of units or components may be combined or integrated into another system, or some features may be ignored, or not executed. For another point, mutual coupling or direct coupling or communication connection which is displayed or discussed may be achieved via some interfaces, indirect coupling or communication connection of the apparatuses or units may be electrical, mechanical or in other forms.

The units described as separate components may be or may not be physically separated, the components displayed as units may be or may not be physical units, which may be located in one place, or may be distributed to a plurality of network units. All or part of the units thereof can be selected according to the actual needs to achieve the purpose of the solutions of these embodiments.

Furthermore, each functional unit in each embodiment of the present invention may be integrated in one processing unit, each unit may also exist separately and physically, and it may 'also be that two or more units are integrated in one unit.

If the function is achieved in the form of software functional unit and is sold or used as an independent product, it can be stored in a computer readable storage medium. Based on this understanding, the technical solutions of the present invention in essence or the part contributing to the prior art or the part of the technical solutions can be reflected in the form of software product, the computer software product is stored in one storage medium, and includes a number of instructions for executing, by a computer equipment (may be a personal computer, a server, or a network equipment, etc.), all or part of the steps of the methods described in various embodiments of the present invention. The storage medium includes: a U disk, a mobile hard disk, a read-only memory (ROM, Read-Only Memory), a random access memory (RAM, Random Access Memory), a magnetic disk or a CD-ROM, or other mediums capable of storing program codes.

Above are only specific implementations of the present invention, and the protection scope of the present invention is not limited to this, those skilled in the art can easily think of variations or substitutions within the technical scope disclosed in the present invention, which should fall within the protection scope of the present invention. Thus, the protection scope of the present invention should be subject to the protection scope of the claims.

## Claims

1. A method for spectrum aggregation, comprising:
combining (110) a first channel bandwidth, CBW, and a second CBW to form an aggregated CBW, wherein the aggregated CBW comprises a first bandwidth portion formed by the first CBW and a second bandwidth portion formed by the second CBW; and
sending (120) data to a receiving end on the aggregated CBW;
**characterized in that** forming the first bandwidth portion by the first CBW and forming the second bandwidth portion by the second CBW comprise:
changing (110'), in a first transform proportion, a clock frequency of the first CBW to form the first bandwidth portion, and/or
changing (110'), in a second transform proportion, a clock frequency of the second CBW to form the second bandwidth portion.

2. The method according to claim 1, wherein:
when sending the data to the receiving end on the aggregated CBW, the data is allocated, in a data allocation ratio, to the first bandwidth portion and the second bandwidth portion for sending, respectively, wherein the data allocation ratio is a ratio of the first bandwidth portion formed after the clock frequency is changed and the second bandwidth portion formed after the clock frequency is changed.

3. The method according to claim 1, wherein:
the first CBW and the second CBW are same.

4. The method according to any one of claims 1-3, wherein:
the first transform proportion is 1/2 or 1/4, and/or
the second transform proportion is 1/2 or 1/4.

5. The method according to any one of claims 1-4, wherein:
the first transform proportion and the second transform proportion are same or different.

6. A device for spectrum aggregation, comprising:
a configuring unit (310), configured to combine a first channel bandwidth, CBW, and a second CBW to form an aggregated CBW, wherein the aggregated CBW comprises a first bandwidth portion formed by the first CBW and a second bandwidth portion formed by the second CBW;
a sending unit (320), configured to send data on the aggregated CBW;
**characterized in that** it further comprises
a transforming unit (330), configured to change, in a first transform proportion, a clock frequency of the first CBW to form the first bandwidth portion, and/or change, in a second transform proportion, a clock frequency of the second CBW to form the second bandwidth portion.

7. The device according to claim 6, wherein:
when the sending unit sends the data on the aggregated CBW, the sending unit is configured to allocate, in a data allocation ratio, the data to the first bandwidth portion and the second bandwidth portion for sending, respectively, wherein the data allocation ratio is a ratio of the first bandwidth portion formed after the clock frequency is changed and the second bandwidth portion formed after the clock frequency is changed.

8. The device according to claim 6, wherein:
the first CBW and the second CBW are same.

9. The device according to any one of claims 6-8, wherein:
the first transform proportion is 1/2 or 1/4, and/or
the second transform proportion is 1/2 or 1/4.

10. The device according to any one of claims 6-9, wherein:
the first transform proportion and the second transform proportion are same or different.

## Patentansprüche

1. Verfahren zur Spektrumaggregation, umfassend:
Kombinieren (110) einer ersten Kanalbandbreite (CBW) und einer zweiten CBW zur Bildung einer aggregierten CBW, wobei die aggregierte CBW einen durch die erste CBW gebildeten ersten Bandbreitenanteil und einen durch die zweite CBW gebildeten zweiten Bandbreitenanteil umfasst; und
Senden (120) von Daten an ein Empfangsende auf der aggregierten CBW;
**dadurch gekennzeichnet, dass** das Bilden des ersten Bandbreitenanteils durch die erste CBW und das Bilden des zweiten Bandbreitenanteils durch die zweite CBW umfasst:
Ändern (110') einer Taktfrequenz der ersten CBW in einem ersten Transformationsanteil, um den ersten Bandbreitenanteil zu bilden, und/oder
Ändern (110') einer Taktfrequenz der zweiten CBW in einem zweiten Transformationsanteil, um den zweiten Bandbreitenanteil zu bilden.

2. Verfahren nach Anspruch 1, wobei:
die Daten beim Senden der Daten an das Empfangsende auf der aggregierten CBW in einem Datenzuweisungsverhältnis dem ersten Bandbreitenanteil beziehungsweise dem zweiten Bandbreitenanteil zum Senden zugewiesen werden, wobei das Datenzuweisungsverhältnis ein Verhältnis des ersten Bandbreitenanteils, gebildet nach Änderung der Taktfrequenz, und des zweiten Bandbreitenanteils, gebildet nach Änderung der Taktfrequenz, ist.

3. Verfahren nach Anspruch 1, wobei:
die erste CBW und die zweite CBW gleich sind.

4. Verfahren nach einem der Ansprüche 1 bis 3, wobei:
der erste Transformationsanteil 1/2 oder 1/4 ist, und/oder
der zweite Transformationsanteil 1/2 oder 1/4 ist.

5. Verfahren nach einem der Ansprüche 1 bis 4, wobei:
der erste Transformationsanteil und der zweite Transformationsanteil gleich oder verschieden sind.

6. Vorrichtung zur Spektrumaggregation, umfassend:
eine Konfigurationseinheit (310), die zum Kombinieren einer ersten Kanalbandbreite (CBW) und einer zweiten CBW zur Bildung einer aggregierten CBW konfiguriert ist, wobei die aggregierte CBW einen durch die erste CBW gebildeten ersten Bandbreitenanteil und einen durch die zweite CBW gebildeten zweiten Bandbreitenanteil umfasst;
eine Sendeeinheit (320), die zum Senden von Daten auf der aggregierten CBW konfiguriert ist;
**dadurch gekennzeichnet, dass** sie ferner umfasst:
eine Transformationseinheit (330), die konfiguriert ist zur Änderung einer Taktfrequenz der ersten CBW in einem ersten Transformationsanteil, um den ersten Bandbreitenanteil zu bilden, und/oder zur Änderung einer Taktfrequenz der zweiten CBW in einem zweiten Transformationsanteil, um den zweiten Bandbreitenanteil zu bilden.

7. Vorrichtung nach Anspruch 6, wobei:
die Sendeeinheit, wenn sie die Daten auf der aggregierten CBW sendet, konfiguriert ist zum Zuweisen der Daten in einem Datenzuweisungsverhältnis an den ersten Bandbreitenanteil beziehungsweise den zweiten Bandbreitenanteil zum Senden, wobei das Datenzuweisungsverhältnis ein Verhältnis des ersten Bandbreitenanteils, gebildet nach Änderung der Taktfrequenz, und des zweiten Bandbreitenanteils, gebildet nach Änderung der Taktfrequenz, ist.

8. Vorrichtung nach Anspruch 6, wobei:
die erste CBW und die zweite CBW gleich sind.

9. Verfahren nach einem der Ansprüche 6 bis 8, wobei:
der erste Transformationsanteil 1/2 oder 1/4 ist, und/oder
der zweite Transformationsanteil 1/2 oder 1/4 ist.

10. Verfahren nach einem der Ansprüche 6 bis 9, wobei:
der erste Transformationsanteil und der zweite Transformationsanteil gleich oder verschieden sind.

## Revendications

1. Procédé d'agrégation de spectre, comprenant les étapes suivantes :
combiner (110) une première bande passante de canal, CBW, et une seconde CBW pour former une CBW agrégée, où la CBW agrégée comprend une première partie de bande passante formée par la première CBW et une seconde partie de bande passante formée par la seconde CBW ; et
envoyer (120) des données à une extrémité de réception sur la CBW agrégée ;
**caractérisé en ce que** la formation de la première partie de bande passante par la première CBW et la formation de la seconde partie de bande passante par la seconde CBW comprennent les étapes suivantes :
changer (110'), dans une première proportion de transformation, une fréquence d'horloge de la première CBW pour former la première partie de bande passante, et/ou
changer (110'), dans une seconde proportion de transformation, une fréquence d'horloge de la seconde CBW pour former la seconde partie de bande passante.

2. Procédé selon la revendication 1, dans lequel :
lors de l'envoi de données à l'extrémité de réception sur la CBW agrégée, les données sont allouées, selon un rapport d'allocation des données, à la première partie de bande passante et à la seconde partie de bande passante pour l'envoi, respectivement, où le rapport d'allocation des données est un rapport de la première partie de bande passante formée après que la fréquence d'horloge a changé et de la seconde partie de bande passante formée après que la fréquence d'horloge a changé.

3. Procédé selon la revendication 1, dans lequel :
la première CBW et la seconde CBW sont identiques.

4. Procédé selon l'une quelconque des revendications 1 à 3, dans lequel :
la première proportion de transformation est 1/2 ou 1/4, et/ou
la seconde proportion de transformation est 1/2 ou 1/4.

5. Procédé selon l'une quelconque des revendications 1 à 4, dans lequel :
la première proportion de transformation et la seconde proportion de transformation sont identiques ou différentes.

6. Dispositif d'agrégation de spectre comprenant :
une unité de configuration (310), configurée pour combiner une première bande passante de canal, CBW et une seconde CBW pour former une CBW agrégée, où la CBW agrégée comprend une première partie de bande passante formée par la première CBW et une seconde partie de bande passante formée par la seconde CBW ;
une unité d'envoi (320), configurée pour envoyer des données sur la CBW agrégée ;
**caractérisé en ce qu'**il comprend en outre :
une unité de transformation (330), configurée pour changer, dans une première proportion de transformation, une fréquence d'horloge de la première CBW pour former la première partie de bande passante, et/ou changer, dans une seconde proportion de transformation, une fréquence d'horloge de la seconde CBW pour former la seconde partie de bande passante.

7. Dispositif selon la revendication 6, dans lequel :
lorsque l'unité d'envoi envoie les données sur la CBW agrégée, l'unité d'envoi est configurée pour allouer, selon un rapport d'allocation des données, les données à la première partie de bande passante et à la seconde partie de bande passante pour l'envoi, respectivement, où le rapport d'allocation des données est un rapport de la première partie de bande passante formée après que la fréquence d'horloge a changé et de la seconde partie de bande passante formée après que la fréquence d'horloge a changé.

8. Dispositif selon la revendication 6, dans lequel :
la première CBW et la seconde CBW sont identiques.

9. Dispositif selon l'une quelconque des revendications 6 à 8, dans lequel :
la première proportion de transformation est 1/2 ou 1/4, et/ou
la seconde proportion de transformation est 1/2 ou 1/4.

10. Dispositif selon l'une quelconque des revendications 6 à 9, dans lequel :
la première proportion de transformation et la seconde proportion de transformation sont identiques ou différentes.
